# EUROPEAN PATENT APPLICATION

(11) **EP 2 463 861 A1**
(43) Date of publication of application: **13.06.2012**
(21) Application number: 11187570.4
(22) Date of filing: 02.11.2011
(51) Int. Cl.: G11B 27/10, G11B 27/34, G06F 17/30, H04S 1/00, G11B 27/034

(54) **Audio playback device and method**

(30) Priority: 10.12.2010 IN DE29542010
(71) Applicant: NXP B.V., 5656 AG Eindhoven (NL)
(72) Inventor: Pallapothu, Shyam Sundera Bala Koteswara Gupta, Redhill, Surrey RH1 1DL (GB); Yadav, Sandeep, Redhill, Surrey RH1 1DL (GB); Reddy, Sanigapally Harinath, Redhill, Surrey RH1 1DL (GB); Bn, Dattaguru, Redhill, Surrey RH1 1DL (GB)
(74) Representative: Crawford, Andrew

(57) **Abstract**

A method and apparatus is for outputting audio files to a user to enable selection of one of the audio files by the user. At least two independent audio files are played simultaneously, distributed differently over a set of speakers, thereby to appear to the user to originate from different directions. This enables a faster selection process by the user.

## Description

The invention relates to audio playback devices, and relates in particular to the task of selecting audio content stored on or accessed by the electronic device.

More and more users enjoy multimedia content from high-storage capacity devices such as portable players, music kiosks, and mobile phones. Users also enjoy multimedia content stored in far away servers through internet connected entertainment devices. Developing easier and natural methods for browsing growing multimedia collections is now a critical need.

Some of the trends that are making fast multimedia exploration increasingly relevant are:
- device storage capacity is no longer a constraint to store large music collections. Individuals' digital music collections are growing such that hundreds to tens of thousands of songs are stored in personal devices.
- digital music production tools have made music creation simple, with many new, unknown artists producing exciting new music that grows the collection of available music.
- exchanging of content is common between users from their personal devices, which requires faster browsing techniques and identification of desired content.
- increasing availability of 3g, 3.5g, 4g supported network devices in the market enables faster access to multimedia content on the web.

Exploring a large collection of multimedia content to find a desired song or music video is a challenge to the user. Common challenges are discovery of desired songs from an unknown collection, and fast browsing within one's own large music collection.

To find a desired content (audio/music/speech/ring tone/music video), users generally browse through files or enter some text information such as the artist or title to search for the desired content through a portable electronic device or web service or WAP (wireless application protocol) service. However, it is usually inconvenient to input text on small devices. Furthermore, many users often do not know or cannot recall the exact titles and/or artists.

Moreover, lots of content, freely available on web or user generated content, has no metadata, making searching more difficult.

Various other search techniques are deployed to identify the desired content but these are generally neither fast nor efficient. Known approaches as alternatives to text-based searching include a music search by providing a melody input, and an audio/video thumbnails search.

For text-based (lyrics) searching, the user has to remember sections of text.

For melody-based searching, the user can hum a song, and the database is searched for a match. This concept of searching is becoming popular but requires high processing power and large storage capacity of data.

In all of these approaches, the user has to remember some details, such as the words/lyrics, melody, artist or title etc. The search technique results are not efficient and search methods can involve the user's continuous engagement with the device until he finds the content of his choice.

Instead of searching for titles or melodies, general browsing can be performed. If a portable device has huge data storage, this can be very slow as each file needs to be listened or played at a given instant of time.

Thus, despite these various approaches, fast and efficient searching of audio/music/speech data is still a problem and challenge in multi-media devices and the existing techniques for finding content in multimedia space are cumbersome.

According to the invention, there is provided an audio playback device, comprising:
a user interface for receiving commands including a browse audio content command;
a processor; and
an audio playback system comprising at least two speakers,
wherein the processor is adapted, in response to the browse audio content command, to control the audio playback system to play back at least two independent audio files simultaneously, distributed differently over the speakers thereby to appear to the user to originate from different directions.

The invention provides a faster approach for finding audio content (music or speech) by listening to multiple audio files at the same time. Multiple audio streams are spatially mixed, and the user can then be given the option to select a particular content of his liking.

The spatial mixing places the sound sources so that they each represent a different audible perceived point source. In addition to playing multiple contents at the same time, a mechanism is provided to the user for selecting the desired content from the multiple outputs, for changing the spatial position of the content, for changing the audio properties for example by configuring pre-processing functions, such as volume, equalization, filtering etc.

The technique of the invention for searching for a desired audio file by listening to multiple files at a given instant of time makes browsing faster. The content listened to can be the full song from the beginning or a thumbnail. The invention thus enables a user to browse and navigate through his music or multimedia collection (on devices such as mobile phones, content on internet, etc) at a fast pace.

The audio playback system preferably comprises headphones, as these are typically the output device for portable devices, which are most commonly used as audio listening devices.

The processor can be controllable to vary the volume at which the audio files are played independently. This means the user can home in on one of the audio files being played to assist making a choice.

The processor can be controllable to vary the frequency characteristics with which the audio files are played independently. This can reduce the overlap between the audio files.

The device can comprise a downmix unit for generating a single track audio file from a stored or accessed audio file. This makes the subsequent processing simpler. A position selector can then be provided for controlling the apparent direction of origin of each audio file. A spatial positioning system can be provided for combining the single track audio files and driving the speakers thereby to make the single track audio files appear to the user to originate from different directions.

The invention also provides a method of outputting audio files to a user to enable selection of one of the audio files by the user, comprising:
playing at least two independent audio files simultaneously, distributed differently over a set of speakers, thereby to appear to the user to originate from different directions.

The invention will now be described in detail with reference to the accompanying drawings, in which:
Figure 1 shows the concept behind the invention;
Figure 2 shows the various functions implemented by the system;
Figures 3 and 4 show the screen output of an example of device of the invention to show the browsing method; and
Figure 5 shows the different spatial destinations for a 5 audio channel system.

The invention provides a system in which in response to a browse audio content command, at least two independent audio files are played simultaneously and distributed differently over the system speakers thereby to appear to the user to originate from different directions.

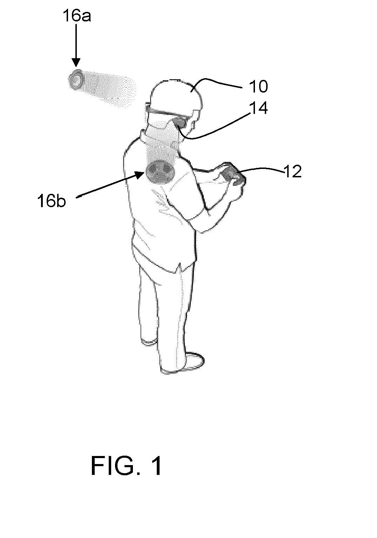

The concept behind the invention is shown schematically in Figure 1. The user 10 has a hand held audio playback device 12 with headphones 14. During an audio browsing function, the user is listening to two different audio files (or audio tracks of two multimedia files which may include video content), which are each played to one ear of the user. Thus, these sound sources appear to originate from different locations 16a, 16b. The two source sources are independent, i.e. they are not separate channels of the same audio file. They are unrelated audio files, for example different music tracks or different music performers. The audio files are not created with the intention of being listened to at the same time.

The hand held playback device 12 accepts multiple songs, either by storing them in memory or by accessing them from a remote database.

The device 12 is able to play multiple songs simultaneously to the output/speaker system 14 such that each individual song can be perceived by the user as a separate sound source.

The simplest implementation is the playback of two songs s1 & s2 as input to stereo speaker system, where song s1 is played to the left speaker and song s2 is played to the right speaker. This technique can be extended to a number n of songs with out necessarily increasing the number of output speaker devices, but by proper virtual positioning in space of the sound sources.

The device 12 also provides controls for controlling various parameters such as volume, frequency and virtual positioning in space of the individual sound source.

The invention in this way enables desired multimedia content to be found easily by spatially separating the sound sources (such as audio/music/speech) and listening to them at the same time.

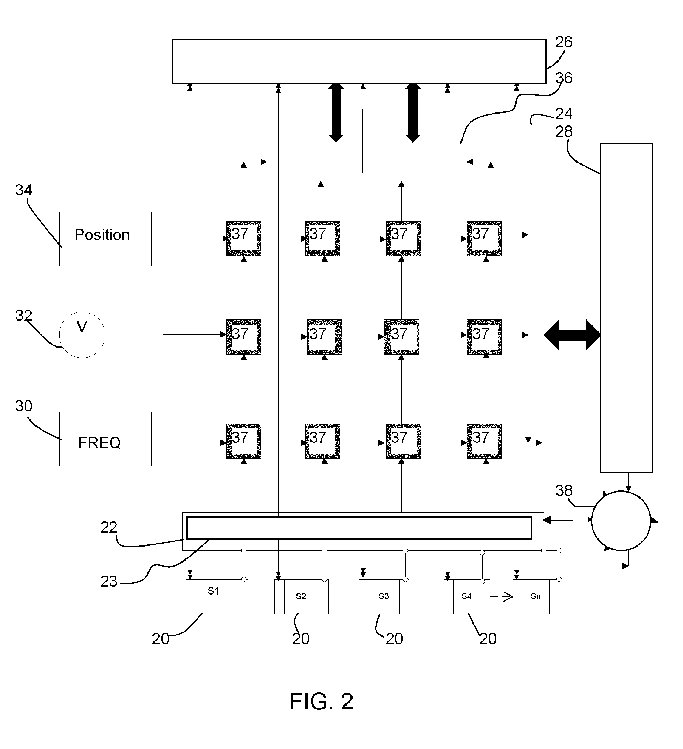

Figure 2 shows the various functions implemented by the system, for processing multiple input sources.

The system comprises audio files 20 which be single channel (mono) or multi-channel files. The files can be audio/music/speech, but in this example the functional behaviour of the system is explained with reference to songs. The songs can be retrieved from an external memory or from a memory of the device.

The system requires at least two songs as input for rendering a spatial mix of these songs at the output. Figure 2 shows song blocks 20 represented as s1, s2... sn. The song inputs are passed through a down mix to mono block 22. If the input is not mono, then the down mix to mono block will down mix the s1 to sn inputs and pass them to the main system block 24. The down mix to mono block 22 can include a sampling rate converter 23. This enables different songs with different sampling frequencies to be converted to have the same sampling frequency (8 to 96kHz) so that they can be easily combined.

The song inputs can also be by-passed directly to the output 26. If the user selects a particular song after browsing and discovering the song of his liking, the output channel plays the song in its original mode (mono, stereo or multi-channel).

The main system block 24 accepts the song inputs, various control inputs and the commands from a browse unit 28, and manages the control of the overall system.

The control inputs enable the individual songs to be processed to improve the ability to identify the songs.

A frequency band control unit 30 can be used to adjust the frequency band for each song input. This can be used to provide the different songs at different frequency bands so that they can more easily be distinguished by the user. This can involve simple band pass filtering of the songs with different band pass filters, so that different frequency content of different songs is played, or it can involve shifting the frequency bands of songs so that they are output at different frequency bands but without losing content. The latter approach will of course change the nature of the songs but in a way which can still enable the content to be recognised and therefore selected for normal playback.

A volume control unit 32 enables the volume of each song to be adjusted based on the spatial position. The volume levels for each song is independent and volume on left, right, center can be varied and accordingly played at the output.

A configuration control unit 34 can be used to place a particular song either on the left, the centre, or the right. This gives the option to swap the spatial position of the songs.

The number of spatial positions can be two (one song to each ear, three (a centre position, and left and right) or higher than three. In general terms, there can be a number n of songs placed at a number n of different angular positions, from rear to front. The degree of song placement can be varied and tuned to mimic a desired spatial displacement. For example music browsing on the device can give the impression of songs moving from left to right as a stream.

The control of the spatial positioning is carried out by the spatial positioning system 36.

The units 30,32,34 can be considered to be in series between the song outputs from the downmix unit 22 and the spatial positioning system. In Figure 2, the functions are shown as a chain of series processing units 37. Each row of these processing units 37 is part of the respective control circuit 30,32,34, and each column of processing units 37 represents the functions applied to each audio file.

The browse unit 28 is a user interface part, which provides the user interface to enable the user to perform the navigation and selection functions.

A selector 38 is connected to all the blocks in the system. The user can control the flow of the system by selecting different options as stated below:
- selection of desired songs to play in fast browsing mode using the spatial mixing technique;
- move left, move right, move up and move down for selecting songs;
- selecting the spatial positions (left, right, centre etc) while browsing;
- adjusting the volume levels up and down;
- option for fade-in/fade-out of sound sources;
- option to select the output sampling frequency mode for spatially mixed input signals;
- selecting a desired song during music browsing or music discovery to play in full mode without spatial mixing.

The spatial positioning system 36 receives inputs from the controllers and the down mix to mono module 22. The combination of s1 to sn songs adjusted with their control settings are spatially positioned by suitable control of the speakers/headphones.

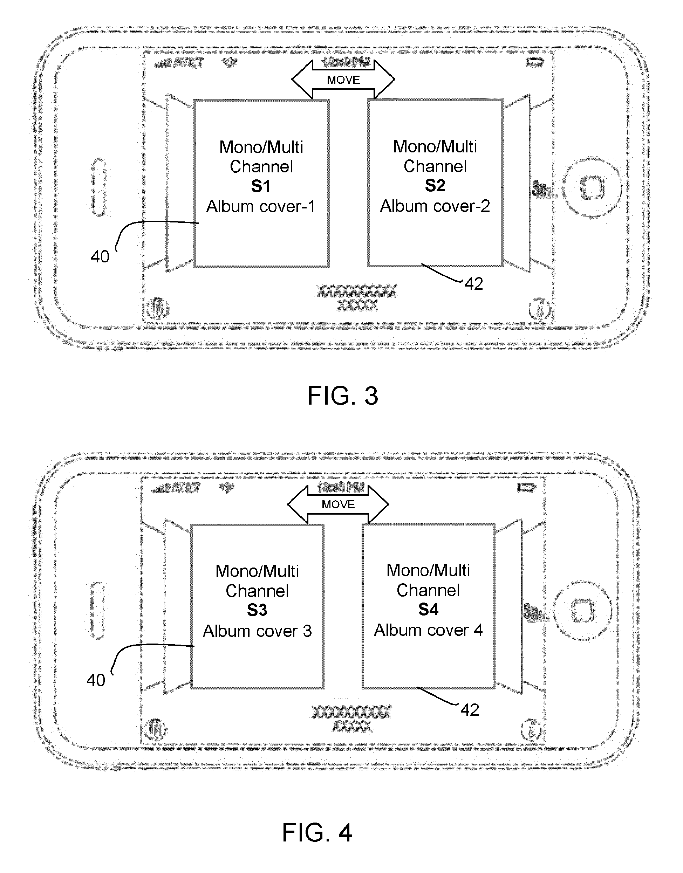

Figures 3 and 4 show the screen output of an example of device of the invention to show the browsing method. In this example, two album covers 40,42 are displayed on the device.

Album cover 1 relates to song s1 provided to the left channel and album cover 2 relates to song s2 playing in the right channel.

On selection of song s1 the device will play song s1 in stereo mode and on selection of song s2 the device will play song s2 in stereo mode.

The songs can be scrolled while navigating. For example, after listening to song s1 which is playing to the left and song s2 which is playing to the right, user can move to songs s2 and s3, where s2 is now playing to the left and song s3 is playing top the right. Instead, both songs can be discarded, and the navigation from songs s1 and s2 is to the next two songs i.e., songs s3 and s4 with their associated album covers, as shown in Figure 4. Songs s3 and s4 are then played in the left and right channels respectively.

If the songs do not include the desired song, the user can again navigate to next set of album covers and select the desired content until all songs have been played.

This example shows two album covers, but the concept can be extended to have 3, 4 or generally up to n album covers displayed on the device, with the audio output spatially positioned in different (virtual) locations.

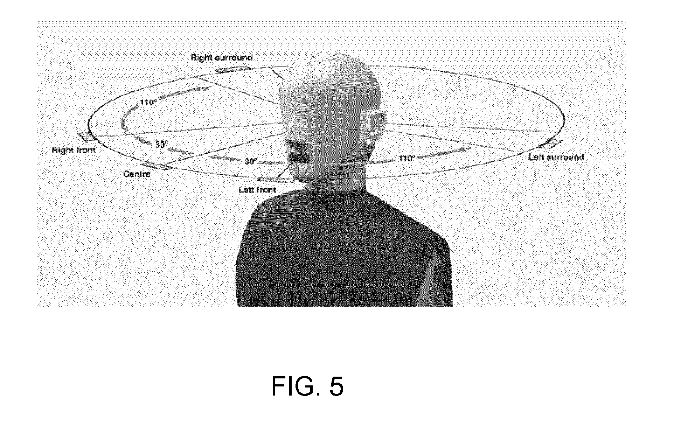

The invention basically requires a device which stores or receives multiple sound sources and selectively provides the sound sources to the user with different perceived spatial locations, at the same time. The different spatial destinations can be left, right and centre or a 5 audio channel arrangement as shown in Figure 5.

The different sound sources can be muted. For example, only the left channel can be allowed to play if user would like to listen to that specific content, similarly the right channel content can be allowed to play by muting the left channel. This can also be extended for multiple channels, so that individual channels can be isolated.

The audio content can be in compressed or uncompressed format, and can be multi-channel coded and mixed for the output source.

The invention provides a faster approach for efficient searching of audio/music/speech content.

The implementation is simple and low cost. The invention is for example of interest in the "hello tunes" application, where users connect to a server and try to select a desired song. The solution is more efficient than a conventional thumbnail music search and can be used to quickly browse and purchase songs over the internet or from music kiosks.

The signal processing to make the audio files appear to originate from different point sources is well known. In the simplest case, one file is played to one speaker and another is played to another speaker. However, two speakers can be used to simulate sound from any direction by replicating the sound that would reach each ear from that particular sound source point (an and since a human only has two ears). The signal processing for this is routine and well known to those of ordinary skill in the art.

There is of course a limit to how many songs can be listened to at the same time. Up to 5 independent audio tracks can certainly be distinguished, and recognised sufficiently that a particular track being searched for can be identified. Many more tracks will result in excessive noise such that the tracks drown each other out. Thus, the number of audio files played simultaneously is preferably between 2 and 5.

The invention is particularly for hand held audio devices, which are of course conventionally arranged to play one track at a time.

The invention can be implemented simply by modification or addition to the software running on the audio playback device, in particular by changing the user interface options, and providing additional speaker driver algorithms and signal processing algorithms for the multiple audio files.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage. Any reference signs in the claims should not be construed as limiting the scope.

## Claims

1. An audio playback device (12), comprising:
a user interface (28) for receiving commands including a browse audio content command;
a processor (24); and
an audio playback system comprising at least two speakers (14),
wherein the processor is adapted, in response to the browse audio content command, to control the audio playback system to play back at least two independent audio files simultaneously, distributed differently over the speakers thereby to appear to the user to originate from different directions.

2. A device as claimed in claim 1, wherein the audio playback system comprises headphones (14).

3. A device as claimed in claim 1 or 2, wherein the processor is controllable to vary the volume at which the audio files are played independently.

4. A device as claimed in any preceding claim, wherein the processor is controllable to vary the frequency characteristics with which the audio files are played independently.

5. A device as claimed in any preceding claim, comprising a downmix unit (22) for generating a single track audio file from a stored or accessed audio file.

6. A device as claimed in claim 5, comprising a position selector (34) for controlling the apparent direction of origin of each audio file in response to user input.

7. A device as claimed in claim 5, comprising a spatial positioning system (36) for combining the single track audio files and driving the speakers thereby to make the single track audio files appear to the user to originate from the different directions.

8. A device as claimed in any preceding claim, comprises a hand held audio playback device.

9. A method of outputting audio files to a user to enable selection of one of the audio files by the user, comprising:
playing at least two independent audio files simultaneously, distributed differently over a set of speakers, thereby to appear to the user to originate from different directions.

10. A method as claimed in claim 9, comprising playing the at least two independent audio files simultaneously to a set of headphones (14).

11. A method as claimed in claim 9 or 10, comprising varying the volume at which the audio files are played independently in response to user commands.

12. A method as claimed in any one of claims 9 to 11, comprising varying the frequency characteristics with which the audio files are played independently.

13. A method as claimed in any one of claims 9 to 12, comprising generating a single track audio file from stored or accessed audio files before combining them for simultaneous playing.

14. A method as claimed in any one of claims 9 to 13, comprising controlling the apparent direction of origin of each audio file in response to user input.

15. A computer program which is adapted when run on a computer to implement the method of any one of claims 9 to 14.
